# EUROPEAN PATENT APPLICATION

(11) **EP 0 621 459 A1**
(43) Date of publication of application: **26.10.1994**
(21) Application number: 94302743.3
(22) Date of filing: 18.04.1994
(51) Int. Cl.: G01C 17/30, G01C 21/20

(54) **A map-reading electronic compass**

(30) Priority: 17.04.1993 GB 9307967
(71) Applicant: Manley, Joseph, West Lothian, Edinburgh EH30 9PD (GB); Wilkie, Douglas, St Andrews, Fife KY16 8BX (GB)
(72) Inventor: Manley, Joseph, West Lothian, Edinburgh EH30 9PD (GB); Wilkie, Douglas, St Andrews, Fife KY16 8BX (GB)
(74) Representative: Pattullo, Norman

(57) **Abstract**

A map-reading electronic compass (10) comprising an electromagnetic sensor (50) for detecting the instantaneous heading of the compass (10) with respect to magnetic North, an electronic memory (52) for recording the angular difference between map denoted North and geographical North when the compass 10 is placed in any given position on the map (2) and a ROM (56) for converting bearings taken over the ground and from the map (2) by calculation using said angular differences, a LCD display (14) for displaying visual indica related to this conversion.

## Description

This invention relates to a map-reading electronic compass for use in navigation.

In this field it is already known that when utilising a conventional magnetic needle compass to guide a person or vehicle along a straight-line route following a predetermined bearing, e.g. point to point, it is necessary first to determine the heading of the intended route, ie. the deviation of the route from magnetic North.

This may be done by noting the intended route on a map, and directly measuring the inclination of the route line from magnetic North as denoted on the map. The person or vehicle then carries the compass and proceeds in a direction which keeps the compass needle pointing at an angle equal and opposite to the predetermined deviation of the mapped route from magnetic North.

Examples of such conventional compasses are described in Swiss Patent Application No 598,572 and French Patent Application No 7829043.

These conventional compasses have the disadvantage in that a compass employing a magnetic needle for determining the direction of magnetic North suffers the inherent disadvantages of all forms of portable instrumentation having moving parts, compounded by the delicacy of the pivot necessary for mounting a magnetic needle. To obviate this, electronic compasses having little or no moving parts have been developed. Examples of compasses such as this are described in US Patent 4,482,255, UK Patent Application GB 2,242,027A and European Patent Application No 0,280,546.

In these examples of the prior art, in order to determine the correct direction in which to travel from a map, the compass user must adjust the reading to compensate for the discrepancy between geographical North and magnetic North. In hitherto known map-reading compasses this may be done by rotating a 360 degree incremental bezel clockwise 5 degrees and 30 minutes (UK 1990).

However, difficulty arises in the compass user's ability to conduct this operation accurately to within plus or minus 1 degree. The general inaccuracy of mechanical compasses being further compounded by the compass user's judgement and eyesight, the precision of the bezel and by an annual shift of magnetic North relative to geographical North.

According to the present invention there is provided a map-reading electronic compass, comprising electromagnetic North-sensing means for detecting the instantaneous heading of the compass with respect to magnetic North, recording means for use with the compass placed on a map held in any given position to record the angular difference between map North in that position and geographical North, calculator means for converting between bearings over the ground and map bearings by calculation using said angular difference, and display means for displaying visual indicia related to said conversion.

Preferably, said recording means includes means operable by a user when the compass is aligned with map North and when the compass is aligned with a desired route to cause the angular difference between North and the desired route to be stored.

Preferably, the display means displays information indicating the divergence of the compass heading from the desired route.

Preferably, the recording means can be operated to store a plurality of sequential route headings.

Preferably, said recording means includes means operable by a user when sighting one or more objects to record the bearing(s) of the object(s) from the user's position.

Preferably, the display means subsequently displays information indicating the divergence of the compass from map North to enable said bearing(s) to be plotted on the map.

Preferably, the display means comprises left, right and ahead directional indicators.

Preferably, the display means additionally comprises a digital readout in compass degrees.

Preferably, the compass includes means providing correction for local magnetic variation.

Preferably, the North-sensing means comprises a fluxgate.

Preferably, the compass incorporates one or more of a chronometer, an altimeter, and a thermometer each providing information on the display means at the command of the user.

Preferably, the compass is contained within a hand-held casing of generally flat rectangular shape and having a removable transparent portion provided with guide lines to aid in aligning the compass on a map.

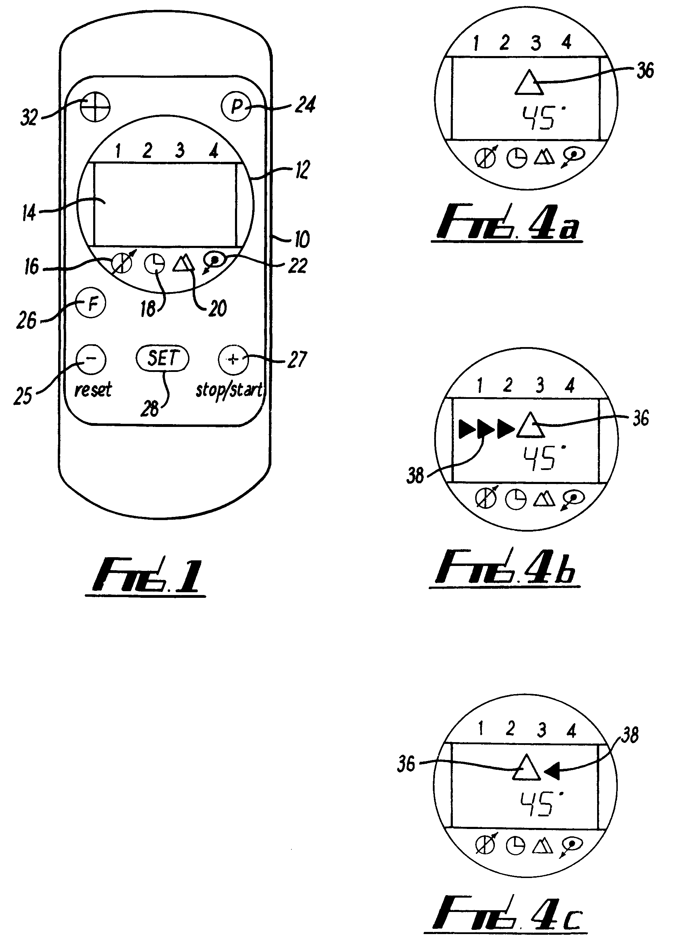

An embodiment of the present invention will now be described by way of example with reference to the accompanying drawings in which:-
Fig. 1 is a plan view of a map-reading electronic compass in accordance with the present invention;
Fig. 2 is a schematic circuit diagram of the compass of Fig. 1;

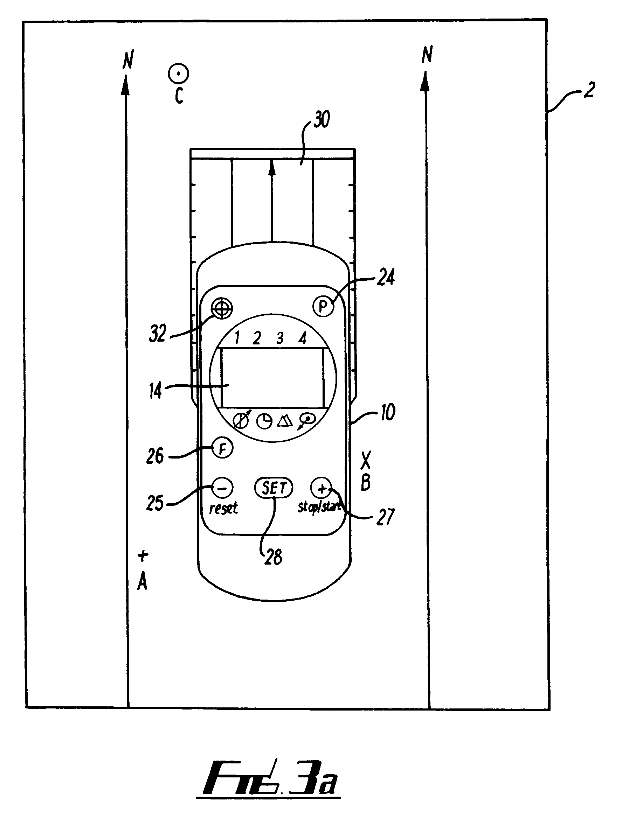

Fig. 3a is a schematic view of the map-reading electronic compass of Fig. 1 in use with a map and aligned with the map denoted North;
Fig. 3b is a schematic view of the map-reading electronic compass of Fig. 1 in use with a map pointing in a direction of an intended route; and
Fig. 4a is a view of the readout means showing the direction of the intended route.
Figs. 4b and 4c are views of the readout means showing the severity of adjustment (left or right respectively) required to maintain the heading of the compass in the direction of the intended route.

Referring to the drawings, a map-reading electromagnetic compass 10 comprises readout means 12 having a liquid crystal display 14, function indicators 16, 18, 20 and 22 which respectively indicate that the compass 10 is in a mode to receive input of azimuth data from a map 2, the compass 10 is set in timer mode, the compass 10 is set in altimeter mode and the compass 10 is set to receive azimuth data from a sighted object, programme indicators denoted by numerals 1 to 4. The function indicators are selected by depressing function key 26 until a cursor (not shown) moves to the required function indicator. Program key 24 is also provided for selecting the required program and for setting the compass 10 in a mode for receiving input obtained from the map 2 and for exiting this mode. Azimuth data is recorded and stored on an electronic memory means 52 housed within the body of compass 10 by depressing input/recall key 28 which is also used to recall consecutive bearings stored within the electronic memory means. Azimuth data is determined by an electromagnetic means such as a fluxgate sensor 50 housed within the body of the compass 10 and in electronic communication with the electronic memory means 52. When the compass 10 is in altimeter mode the starting point altitude is set using keys 25 and 27 and input/recall key 28 is depressed thereby storing the starting point altitude in the electronic memory means 52.

Before determining the azimuth direction of an intended route between two or more points on the map 2, function key 26 is depressed until the cursor (not shown) indicates that compass 10 is set to receive input of azimuth data from the map 2. A transparent grid plane 30 is attached to the compass 10 and the compass 10 is aligned with map-denoted North facilitated by markings on the transparent grid plane 30. It is necessary to keep the compass 10 and the map horizontal during this procedure and a spirit level 32 is provided to indicate the horizontal position of the compass 10. To input a bearing from the map, program key 24 is depressed and the program indicators flash showing that the electronic memory means 52 is ready to store azimuth data. When the compass 10 is aligned with map-denoted North the input/recall key 28 is depressed and the output of the electromagnetic means 50 is recorded and stored in the electronic memory means 52.

After this procedure the compass 10 is aligned in a direction of an intended route and, whilst the compass 10 and the map 2 remain in a horizontal position, the input/recall key 28 is depressed and the output of the electromagnetic means 50 is recorded and stored in the electronic memory means 52 and the corresponding bearing relative to the map-denoted North is calculated and displayed in display 14. This process can be repeated to record the output of the electromagnetic means 50 when the compass 10 is aligned along the direction of up to three subsequent intended routes. The result is that each recording is stored in the electronic memory means 52 and is indicated by program indicators denoted by numerals 1 to 4.

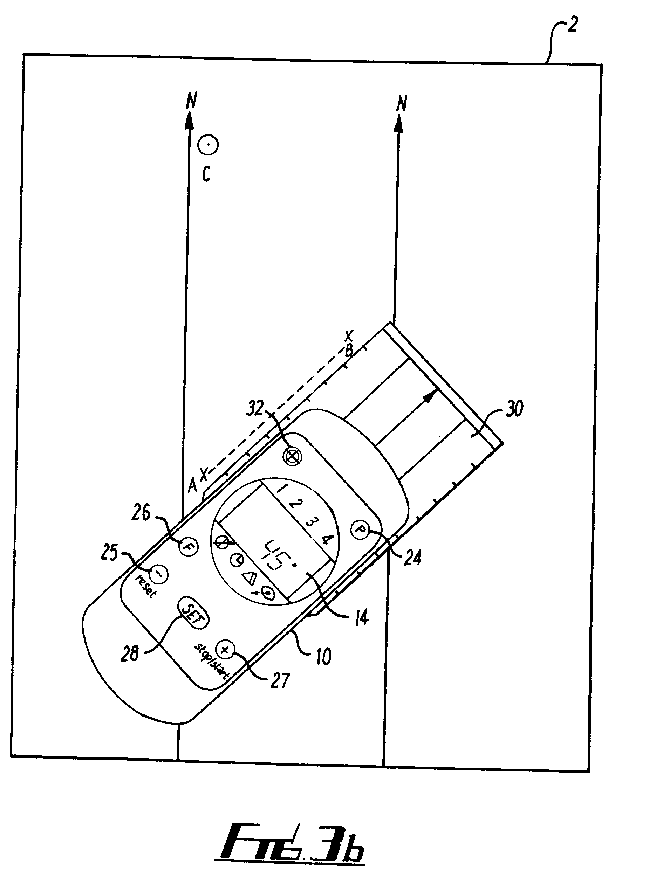

To follow the desired route over the ground, the input/recall key 28 is depressed and the display 14 displays the bearing relative to North of the intended route desired by the user and an icon 36 indicates the angular direction of the intended bearing as shown in Fig. 4a. Figs. 4b and 4c show that when the direction of the compass 10 veers either to the left or right of the correct bearing, arrows 38 indicate the adjustment (left or right) to be made by the user in order to align the directional heading of the compass 10 with the correct bearing. The severity of the adjustment needed is indicated by the number of arrows 38 displayed, namely one arrow for a slight adjustment and a plurality of arrows for a more severe adjustment. The bearing and direction of subsequent routes stored in the programs indicated by numerals 2 to 4 are recalled by depressing the input/recall key 28 until a cursor (not shown) indicates the program numeral required and the direction of each route can be followed by heading in the direction indicated by icon 36 and making the necessary adjustments (left or right) as described above.

When the compass 10 is set to receive azimuth data from the ground the compass is aimed at a sighting such as a landmark and the compass user depresses input/recall key 28, thereby storing the first bearing in the electronic memory means 50 and indicated by program numeral 1. Up to three additional sight bearings may be respectively stored by depressing input/recall key 28 in program indicated by numerals 2 to 4.

After this procedure, the compass 10 is aligned on a map with map-denoted North facilitated by the transparent grid plate 30 attached to the compass 10.

Once the compass 10 and the map are in a horizontal position, input/recall key 28 is pressed and the bearing of map-denoted North is stored in the electronic memory means 50. The display 14 then displays the first selected sight bearing stored in program indicated by numeral 1, the compass 10 is panned left or right with the arrows 38 in display 14 indicating the necessary adjustment (left or right) to be made to align the compass 10 on the map in a direction corresponding to the first sighting. Once the compass 10 is aligned a bearing line is drawn and input/recall key 28 is depressed to display in the display 14 the second selected sight bearing stored in program indicated by numeral 2, and the procedure is repeated.

The compass 10 is provided with a timer which is displayed in display 14 by depressing function key 26 until a cursor (not shown) indicates function indicator 18. The timer functions as a clock and a stopwatch is operable by keys 25 and 27.

To compensate for the annual variation between geographical North and magnetic North the compass 10 is calibrated by the compass user inputting the current magnetic variance using keys 25 and 27 and then pressing the input/recall key 28. In this embodiment the compass 10 is powered by batteries and the calibration of the compass 10 is done each time the batteries are replaced.

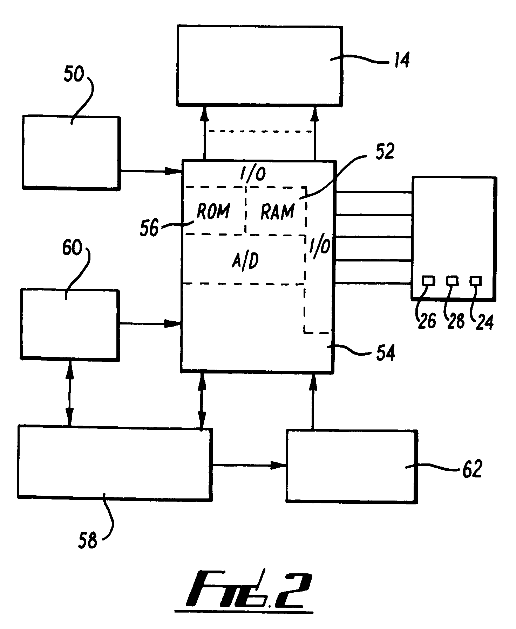

As shown in Fig. 2, the compass 10 may be based on a microcontroller 54 of known type including memory 52 in the form of a RAM, and controlled by program data held in ROM 56. The microcontroller is provided with decoding and timing circuits 58 of known type, which also provide timing data for the timer function discussed above. The compass 10 includes an altitude sensor 60 (for example a barometric pressure cell) to provide data for the altitude function, and a temperature sensor 62 (for example a thermistor) which enables a readout of ambient temperature to be selected.

It will be apparent that the principles of the invention can be implemented by other forms of electronics than those of Fig. 2.

The advantages of a map-reading electronic compass of this embodiment of the present invention is that the compass 10 incorporates a map reading interface and a simple operational sequence which enables the compass user to select his or her intended direction of travel from a map.

The compass 10 incorporates an altimeter allowing the user to cross reference directional and height information to determine more precisely his or her position on a map. (The ability to cross reference direction and height information can be particularly useful in conditions of poor visibility).

Also, the compass 10 can be automatically programmed to determine the deviation of geographical North from magnetic North dispensing for the need to compensate for the difference between geographical North and magnetic North when using a map. This difference varies fractionally year by year (UK 1990, magnetic North is 5.5 degrees West of geographical North, currently deceasing by 09' per year).

In addition, the compass 10 is also provided with a programming feature allowing the compass user to input a number of bearings prior to commencing a journey. This ability to programme a number of manoeuvres into the compass 10 enables the user to save time and dispense with inconvenient map referral and/or include contingency information for safely abandoning a journey.

In an alternative embodiment the compass 10 incorporates a timing facility enabling the user to deduce approximately distance travelled. In another alternative embodiment the compass 10 incorporates a sighting facility, which via a simple input and triangulation procedure will enable the compass user to deduce more accurately his/her location on the map.

## Claims

1. A map-reading electronic compass, comprising electromagnetic North-sensing means for detecting the instantaneous heading of the compass with respect to magnetic North, recording means for use with the compass placed on a map held in any given position to record the angular difference between map North in that position and geographical North, calculator means for converting between bearings over the ground and map bearings by calculation using said angular difference, and display means for displaying visual indicia related to said conversion.

2. A compass according to claim 1, in which said recording means includes means operable by a user when the compass is aligned with map North and when the compass is aligned with a desired route to cause the angular difference between North and the desired route to be stored.

3. A compass according to claim 2, in which the display means displays information indicating the divergence of the compass heading from the desired route.

4. A compass according to claim 2 or claim 3, in which the recording means can be operated to store a plurality of sequential route headings.

5. A compass according to any preceding claim, in which said recording means includes means operable by a user when sighting one or more objects to record the bearing(s) of the object(s) from the user's position.

6. A compass according to claim 5, in which the display means subsequently displays information indicating the divergence of the compass from map North to enable said bearing(s) to be plotted on the map.

7. A compass according to any preceding claim, in which the display means comprises left, right and ahead directional indicators.

8. A compass according to claim 7, in which the display means additionally comprises a digital readout in compass degrees.

9. A compass according to any preceding claim, including means providing correction for local magnetic variation.

10. A compass according to any preceding claim, in which the North-sensing means comprises a fluxgate.

11. A compass according to any preceding claim, incorporating one or more of a chronometer, an altimeter, and a thermometer each providing information on the display means at the command of the user.

12. A compass according to any preceding claim, contained within a hand-held casing of generally flat rectangular shape and having a removable transparent portion provided with guide lines to aid in aligning the compass on a map.
